# EUROPEAN PATENT APPLICATION

(11) **EP 4 485 307 A1**
(43) Date of publication of application: **01.01.2025**
(21) Application number: 24183953.9
(22) Date of filing: 24.06.2024
(51) Int. Cl.: G06Q 10/08

(54) **COMPUTER-ASSISTED TROUBLESHOOTING OF PACKAGING LINES USING LARGE LANGUAGE MODELS**

(30) Priority: 27.06.2023 IT 202300013296
(71) Applicant: Tetra Laval Holdings & Finance S.A., 1009 Pully (CH)
(72) Inventor: BREHAS, Alessandro, 41123 Modena (IT); DE CORTE, Paolo, 41123 Modena (IT); GAZZADI POGGIOLI, Matteo, 41123 Modena (IT); VERASANI, Mattia, 41123 Modena (IT); MALTONI, Luca, 41123 Modena (IT)
(74) Representative: Tetra Pak - Patent Attorneys SE

(57) **Abstract**

Disclosed is a method (600) for computer-assisted troubleshooting of a packaging line (1) configured to produce packages. In one embodiment, the method (600) comprises the following steps: receiving (602), via an input device, a problem statement (402) in natural language from a user indicating a problem that has occurred during operation of the packaging line (1); generating (604), by a trained language model (42) and based at least in part on the problem statement (402), one or more instructions (404) indicating operations to be performed by the user on the packaging line (1) to alleviate the problem; and outputting (606), via an output device, the one or more instructions (404) in natural language to the user. Also disclosed is a method (500) of training a language model (42), a language model (42), data processing apparatus (4), a packaging line (1), and a computer program.

## Description

### Technical Field

The present invention relates to the field of packaging production technology, and more particularly to a method for computer-assisted troubleshooting of a packaging line configured to produce packages, a method of training a language model for use in such a method, as well as a corresponding language model, a data processing apparatus and a computer program.

### Background of the invention

As is known, many liquid, semi-liquid or pourable food products, such as fruit juice, UHT (ultra-high-temperature treated) milk, wine, tomato sauce, etc., are distributed and marketed in packages, in particular composite packages made of a multilayer composite packaging material.

A typical example is the parallelepiped-shaped package for pourable food products known as Tetra Brik Aseptic^{™}, which is made by sealing and folding a laminated strip packaging material. The packaging material has a multilayer structure comprising a carton and/or paper base layer, covered on both sides with layers of heat-seal plastic material, e.g., polyethylene. In the case of aseptic packages for long-storage products, the packaging material also comprises a layer of oxygen-barrier material, e.g., an aluminum foil, which is superimposed on a layer of heat-seal plastic material and is in turn covered with another layer of heat-seal plastic material forming the inner face of the package eventually contacting the food product.

Composite packages of this sort are typically produced within packaging production lines, which may also be referred to as packaging lines or filling lines. Such packaging lines may operate fully or essentially fully automatic and may form the packages starting from a web of multilayer composite packaging material (wound from a reel) and fill the composite packages with the pourable food product.

A typical packaging line comprises at least a filling machine, which forms the composite packages from the multilayer composite packaging material and fills the composite packages with the pourable food product. Additionally, packaging lines may also comprise downstream treatment equipment, receiving the composite packages from the filling machine and executing additional treatments on the composite packages; the downstream treatment equipment may for example comprise one or more of a buffer unit for temporarily buffering the composite packages; an application unit for applying e.g. straws on the composite packages; a grouping unit, e.g. a palletizer unit, for grouping a plurality of composite packages together in a storing unit (such as a pallet).

In particular, the multilayer composite packaging material is generally provided in the form of a web, in particular being wound up on a packaging material reel, from which it is fed through the filling machine, wherein a tube is formed from the web by producing a longitudinal sealing. The liquid food product is fed into the tube via a pipe; a lower end of the tube is then fed into a folding device, in which a transversal sealing is produced, the tube being folded according to folding lines, also referred to as weakening lines, and then cut off such that the composite packages filled of the liquid food product are formed.

Defect monitoring and detection is important in such packaging lines, and particularly so in the manufacturing of the composite packages for pourable food products, due to the very high speeds used to increase the throughput of the packaging line. At the same time, the technical complexity of the above-described packaging lines can make it difficult for an operator to identify the cause of a machine problem as well as a suitable solution, wherein such a solution has to be found very quickly to not interrupt or otherwise negatively affect the production.

It is therefore an objective of the present disclosure to provide techniques for assisting a packaging line operator in identifying decisive answers regarding machine problems quickly when they occur during operation of the packaging line.

### Summary of the invention

The objective is solved by the subject-matter defined in the independent claims. Advantageous modifications of embodiments of the present disclosure are defined in the dependent claims as well as in the description and the figures.

One aspect of the present disclosure relates to a method for computer-assisted troubleshooting of a packaging line configured to produce packages. Troubleshooting a packaging line is an important and difficult technical task due to several reasons. First of all, packaging lines are critical components of manufacturing operations. When a packaging line encounters issues or malfunctions, it can disrupt the entire production process, leading to delays, decreased productivity, and increased downtime. Troubleshooting is crucial to identify and resolve problems promptly, minimizing the impact on production efficiency. However, packaging lines often include numerous interconnected components such as conveyors, sensors, fillers, sealers, labeling machines, and/or control systems. The complexity and integration of these components make troubleshooting challenging. Identifying the root cause of an issue requires a deep understanding of the system as a whole, as well as the individual components and their interactions. Effective troubleshooting of a packaging line may require understanding mechanical systems, electrical circuits, control systems, automation, sensor technologies, programming, and more. Moreover, troubleshooting often needs to be performed in real-time or at least as quickly as possible to minimize downtime and production losses. This requires quick decision-making and implementing corrective actions promptly. Packaging lines often operate in challenging environments, such as high-speed production lines. This can affect the performance and reliability of the equipment, making troubleshooting more complex.

According to one aspect of the present disclosure, the method may comprise a step of receiving, via an input device, a problem statement in natural language from a user. The problem statement may indicate a problem that has occurred during operation of the packaging line. The method may comprise a step of generating, based at least in part on the problem statement, one or more instructions indicating operations to be performed by the user on the packaging line to alleviate the problem. The step of generating the one or more instructions may be performed by a trained language model. The method may comprise a step of outputting, via an output device, the one or more instructions in natural language to the user.

This way, a computer-implemented assistant or agent is provided which can interact in a conversational way to help the user to obtain relevant information about the packaging line, in particular for troubleshooting purposes. The dialogue format in natural language makes it possible to answer questions, extrapolate text from user manuals and/or provide a variety of helpful information, such as charts and/or images.

The methods disclosed herein can assist the user in performing the technical task of troubleshooting the packaging line by means of a continued and/or guided human-machine interaction process. In particular, the one or more instructions provided by the methods disclosed herein may relate to an internal state prevailing in the packaging line and/or its components (see the examples further below), thereby enabling the user to properly operate the packaging line.

The methods disclosed herein are preferably performed during the operation of a real existing packaging line, especially when the user has identified a problem in the operation of the packaging line. Accordingly, the disclosed methods may be understood as processes which are embedded in the overall operation of the packaging line.

When the output of the method, i.e., the one or more instructions generated by the language model, is output via the output device to the user, which is the same user who provided the problem statement received via the input device, this creates a closed loop process of human-machine interaction.

As explained above, the one or more instructions indicate operations to be performed by the user on the packaging line to alleviate the problem. Accordingly, during the intended use of the disclosed methods, the user will in normal cases follow the one or more instructions generated by the language model, thereby making the user essentially a link in the technical chain, so that the one or more instructions and thus the output of the language model has a direct link with physical reality, or at least an implied technical effect. The language model itself represents a technical tool in the disclosed methods since it is applied to a field of technology, i.e., package production, and used to solve a specific technical problem, namely assisting in the troubleshooting of the packaging line.

The packaging line should be understood as a technical device configured to produce packages, in particular packages containing food products, more particularly liquid, semi-liquid or pourable food products such as the examples mentioned further above. A packaging line may comprise at least one filling machine configured to form packages from multilayer composite packaging material and to fill the packages with the product. A packaging line may also comprise downstream treatment equipment configured to receive the composite packages from the filling machine(s) and to execute additional treatments on the packages. The downstream treatment equipment may comprise, without limitation, one or more of a buffer unit for temporarily buffering the packages, an application unit for applying, e.g., straws on the packages, and/or a grouping unit, e.g., a palletizer unit, for grouping a plurality of packages together in a storing unit, such as a pallet. The packaging line which is the subject of the methods disclosed herein may be arranged in a manufacturing plant or system.

The user should be understood as a person working on or otherwise interacting with or associated with the packaging line. For example, the user may be an operator of the packaging line, a technician, or maintenance personnel.

The problem statement in natural language should be understood as a portion of language provided by the user to formulate a problem that has occurred during operation of the packaging line. The methods disclosed herein may not impose substantial restrictions, or no restrictions at all, on the format and/or content of the problem statement. Rather, the user may be allowed to freely formulate the problem statement.
Non-limiting examples of problem statements may include:
Package number 20 has a dent on the top.

The fill level of the liquid in the packages varies inconsistently, resulting in underfilled (or overfilled) packages.

The packaging line frequently experiences leaks or spills during the filling (or sealing) process.

Packages are not properly sealed.

The labeling process results in misaligned (or unreadable) labels on the packages.

The packaging line experiences jams or blockages.

The packaging line is unable to maintain the required production speed.

The barcode or QR code on the packages fails to scan (or contains incorrect information).

The packaging line produces packages with inconsistent (or inaccurate) product codes (or batch numbers).

The packaging materials, such as bottle caps or closures, have defects or fail to securely seal the packages.

The packaging line experiences excessive downtime due to equipment breakdowns or malfunctions.

The packaging line produces packages with damaged or scratched surfaces.

Packages get stuck or misaligned on the conveyor system.

The liquid product foams excessively during the filling process, causing spillage or package integrity issues.

The packaging line produces packages with inconsistent or incorrect labeling information, such as ingredients or nutritional facts.

Packages experience excessive vibrations or shaking during the packaging process, resulting in product agitation or foaming.

The packaging line fails to maintain the desired temperature or environmental conditions required for the product.

The packaging line struggles to handle different package sizes or formats.

The packaging line produces packages with illegible or smudged printing on labels or packaging materials.

Packages fall off or get knocked over during the packaging process.

The one or more instructions indicating operations to be performed by the user on the packaging line to alleviate the problem should generally be understood as any information that may help or assist the user in solving the problem indicated in the problem statement.

The one or more instructions may comprise specific recommended actions to be performed by the user. Non-limiting examples of instructions to the exemplary problem statements mentioned further above may include:
Try to set the filling pressure higher (the instruction may also explain the likely cause of the problem to improve the understanding by the user, such as "The dent may be caused by the filling pressure being too low, please try to set it higher").

Adjust the filling settings or parameters to ensure accurate and consistent fill levels. Calibrate or replace any malfunctioning sensors or equipment involved in the filling process.

Inspect and repair any faulty valves, seals, or connections. Ensure proper alignment and tightness of components involved in the liquid transfer and sealing process.

Verify that the sealing equipment is functioning correctly and set at the appropriate temperature and pressure. Replace worn or damaged sealing components, such as heating elements or sealing bars.

Check and adjust the label application equipment for proper alignment and accuracy. Verify the quality and positioning of the label rolls. Ensure the correct label format and printing settings are used.

Inspect and clean the conveyor system, removing any debris or obstructions. Ensure proper alignment and tension of the conveyor belts. Check and adjust guide rails or dividers if necessary.

Identify and address bottlenecks or issues in the packaging line that are slowing down production. Optimize equipment settings, streamline processes, or consider equipment upgrades if feasible.

Ensure the correct printing settings and high-quality printing for barcodes or QR codes. Verify the readability of codes using appropriate scanning equipment. Replace faulty or damaged code printers if needed.

Review the system for coding or labeling of products. Check and calibrate coding equipment. Verify the accuracy of data input or integration with coding systems.

Inspect and replace defective or damaged packaging materials, such as bottle caps or closures. Adjust equipment settings to ensure proper sealing and security of the packages.

Follow preventive maintenance schedules to ensure equipment is regularly inspected, lubricated, and serviced. Report any malfunctions promptly to maintenance or engineering teams for repair or adjustment.

Inspect and replace worn or damaged components involved in the packaging process, such as guides or supports. Verify the correct positioning and functioning of protective elements, such as brushes or paddles.

Check and adjust the conveyor system for proper alignment and tension. Inspect and repair any faulty or misaligned conveyor belts, rollers, or guides.

Optimize the filling parameters to minimize foaming. Consider adjusting the liquid flow rate. Ensure the filling equipment is functioning correctly, including nozzles or dispensing heads.

Review and validate the labeling data sources or systems. Audit label printing and inspection processes.

Inspect and balance moving components, such as conveyor belts or rotating parts. Evaluate the mounting or installation of the packaging equipment. Consider shock-absorbing measures or vibration isolation.

Monitor and adjust the temperature and environmental conditions within the packaging area. Ensure proper insulation, ventilation, or heating/cooling systems as required for the liquid product.

Streamline changeover procedures and minimize downtime. Provide clear instructions or visual aids for operators to switch between package sizes or formats efficiently. Consider implementing standardized changeover kits or quick-change components.

Verify the print quality and settings of the printing equipment. Check and replace ink cartridges or printing heads as needed. Ensure proper maintenance and cleaning of printing systems.

Review and optimize the design or configuration of the packaging line to minimize package handling errors. Check and adjust conveyor speeds or guides to ensure proper package handling and stability.

The one or more instructions may comprise other information than specific recommended actions, possibly in combination with one or more specific recommended actions. For example, the one or more instructions may comprise documents, charts, graphs, photographs, illustrations, checklists, historical process data, production logs, quality control reports, maintenance records, tables, flowcharts, decision trees (or links to these elements) or any other information that may help or assist the user in solving the problem indicated in the problem statement. This way, the language model generating the one or more instructions may be understood in the sense of a retrieval-augmented language model, or retrieval-augmented LLM.

The input device via which the problem statement is received may comprise any technical device configured to capture natural language provided by the user as input to the claimed methods. Different input modalities, or combinations thereof, may be supported. A keyboard (e.g., a traditional computer keyboard embodied as a physical keyboard, or a virtual keyboard displayed on a touchscreen) is one example of an input device which allows the user to enter the problem statement in text form. As another example, the input device may be a microphone allowing the user to input the problem statement in spoken form. The spoken language may be converted into text using speech-to-text algorithms before being processed by the language model. Another example of an input device is a pen-based input device, such as a digital stylus or pen tablet which can be used to write or draw natural language characters on a touch-sensitive surface.

The output device via which the one or more instructions are output to the user may comprise any technical device suitable to accommodate the output of natural language to the user. Different output modalities, or combinations thereof, may be supported. For example, a display device, such as a computer screen or a mobile device screen, can present the natural language output, displaying the one or more instructions on the screen for the user to read, as well as to visually inspect images, graphs, charts, or the like, if they are included in the one or more instructions. As another example, speakers may convey the one or more instructions in audible form. Text-to-Speech (TTS) technology may be used to convert written text into synthesized speech, allowing the user to hear the one or more instructions.

The input device and/or the output device may be arranged directly on the packaging line. In addition or alternatively, the input device and/or the output device may be part of a device associated with and/or connectable to the packaging line, such as a data processing device (such as a control computer, station, terminal, or the like), a mobile device (such as a smartphone, tablet, or the like) or a wearable device (such as a virtual reality and/or augmented reality device, smart glass, smart watch, or the like). The input device and the output device may be integrated in the same device.

The language model should be understood as a computerized model configured to understand natural language provided as input and to generate natural language as output. The language model may be configured to recognize, summarize, translate, predict and/or generate text and/or other forms of content. Examples of language models include, without limitation, GPT-3 and GPT-4 from OpenAl, LLaMA from Meta, and PaLM2 from Google. The language model may be based on or incorporate principles from the field of computer science, specifically natural language processing (NLP) and machine learning.

In the context of NLP, a language model typically aims to capture the complex patterns, structures, and/or semantics of human language. It may leverage computational algorithms and/or statistical models to learn the relationships between words, phrases, and/or sentences within a given language. By analyzing vast amounts of textual data, a language model may acquire the ability to make predictions, generate coherent text, and/or perform various language-related tasks.

Machine learning may refer to algorithms and statistical models that computer systems can use to perform a specific task without using explicit instructions, instead relying on models and inference. For example, in machine-learning, instead of a rule-based transformation of data, a transformation of data may be used, that is inferred from an analysis of historical and/or training data.

A language model may be a deep learning model. A language model may comprise or consist of an artificial neural network with multiple parameters. At its core, a language model is typically implemented as a form of recurrent neural network (RNN) and/or transformer architecture. These architectures enable the language model to process sequential information and capture dependencies between words and phrases. The language model's parameters, also referred to as weights, can be learned through a process called training, which involves presenting the model with large amounts of text data and adjusting the parameters based on the observed patterns and statistical properties of the data. The training of the language model will be described in more detail further below.

Language models may comprise a large number of parameters, typically millions or even tens of millions to billions of parameters, which is why such models are commonly referred to as large language models (LLM). Though typically trained on relatively simple tasks such as predicting the next word in a sentence, language models with sufficient training and/or parameter counts have been found to adequately capture much of the syntax and semantics of human language.

According to another aspect of the present disclosure, the language model has been trained using at least one operation manual associated with the packaging line. The operation manual may be a comprehensive document that provides detailed instructions, guidelines, and/or information on how to properly operate, maintain, troubleshoot, and/or perform routine tasks on the packaging line. The operating manual may serve as a reference guide for users. The operating manual may comprise a plurality of pages, typically at least multiple hundreds of pages, sometimes even more than 2.000 pages. The operation manual may be provided in an electronic document format such as PDF or the like.

The operation manual may include the following sections, or any subcombination thereof:
Introduction: An overview of the packaging line, its purpose, and/or key features. This section may also provide an introduction to the manual itself and outline its organization and structure.

Safety Guidelines: Detailed safety instructions and/or precautions that must be followed to ensure the well-being of operators and prevent accidents. This section may cover topics such as proper use of personal protective equipment (PPE), emergency procedures, and/or specific safety considerations related to the packaging line's operation.

Machine Description: A comprehensive description of the packaging line, including its various components, controls, interfaces, and/or functions. This section may include diagrams, labeled illustrations, and/or photographs to aid in understanding the packaging line's structure and/or layout.

Operating Procedures: Step-by-step instructions on how to set up, configure, and/or operate the packaging line. This section may cover tasks such as power-on and/or power-off procedures, material loading, adjustments of settings, running production cycles, and/or monitoring machine performance.

Maintenance and Troubleshooting: Guidelines on routine maintenance tasks, including cleaning, lubrication, and/or periodic inspections. This section may also provide troubleshooting procedures to identify and/or resolve common issues and/or faults that may occur during operation. This section may include diagnostic charts, error code explanations, and/or recommended corrective actions. This section aims to ensure the packaging line's optimal performance, reliability, and/or longevity. The section typically may include the following subtopics, or sub-combinations thereof:
a) Routine Maintenance: Instructions for routine maintenance tasks, including regular cleaning, lubrication, and/or inspection procedures. This section may specify the recommended cleaning agents, methods, and/or frequency of cleaning different machine components. Lubrication guidelines may indicate the specific lubricants to be used, their application points, and/or the recommended schedule for lubrication. Routine inspections may involve checking for loose or damaged parts, worn-out components, and/or signs of wear and tear.
b) Preventive Maintenance: This section may focus on proactive measures to prevent potential issues and maximize the packaging line's lifespan. It may include a schedule for preventive maintenance tasks, such as replacing filters, belts, and/or other wear-prone components. Additionally, it may provide guidelines for calibrating sensors, adjusting settings, and/or verifying the accuracy of measurements to ensure consistent performance.
c) Troubleshooting Procedures: Detailed troubleshooting procedures may be provided to assist users in identifying and resolving common issues encountered during machine operation. This may include a comprehensive list of potential problems, possibly accompanied by step-by-step instructions for diagnosing the cause and/or taking appropriate corrective actions. Troubleshooting charts, flowcharts, and/or decision trees may be included to aid in the systematic resolution of issues. Each problem may have a corresponding set of potential causes, symptoms, and/or recommended solutions.
d) Error Codes and Alarms: This section may cover the packaging line's error codes or alarm system and their associated meanings. It may provide a comprehensive list of error codes, alarms, and/or warnings that may be displayed on a control panel or interface. For each code or alarm, an explanation may be given to help users identify the problem and take the necessary corrective measures. It may also include instructions on how to clear or reset error codes after resolving the underlying issues.
e) Maintenance Tools and Spare Parts: Information regarding the specific tools, equipment, and/or supplies required for maintenance tasks may be provided in this section. It may list the recommended tools, their purpose, and/or instructions on how to use them effectively. Additionally, there may be a section dedicated to spare parts, specifying the part numbers, descriptions, and/or recommended sources for obtaining replacement components.
f) Contact Information and Technical Support: The operation manual may include contact information for technical support, customer service, and/or the manufacturer's service department. This information may enable users to seek further assistance when faced with complex issues or inquiries beyond the scope of the manual. It may include phone numbers, email addresses, and/or website links to access online resources or knowledge bases.

Technical Specifications: Detailed specifications of the packaging line and/or its components, such as power requirements, dimensions, weight, capacity, speed, and/or any other relevant technical information.

Appendices: Additional reference materials, such as electrical diagrams, spare parts lists, and/or recommended suppliers for replacement components.

Using at least one operation manual and/or any of the above-described information associated with the packaging line for the training helps to create a language model which possesses a comprehensive body of knowledge about the target parameters, conditions and/or states of the packaging line, enabling the language model to answer a plethora of problem statements.

According to another aspect of the present disclosure, the language model has been trained using process data collected from the packaging line. The process data may comprise information about the packaging line, information about one or more components of the packaging line, and/or information about the produced packages. The process data may be generated during operation of the packaging line. The process data may be collected using sensors, i.e., it is measurement data reflecting technical properties of the packaging line, of one or more components of the packaging line and/or of the produced packages. The specific process data can vary depending on the complexity and capabilities of the packaging line, as well as the type of products being packaged. Examples of process data collected in a packaging line may include any of the following:
Production Metrics: Data related to the production output and/or efficiency of the packaging line. This may include information such as the number of units packaged per unit of time (e.g., items per minute), overall equipment effectiveness (OEE), production rates, downtime durations, and/or overall line efficiency.

Machine Performance Data: Data regarding the performance of individual machines or components within the packaging line. This may include data on machine speed, cycle times, operating temperatures, pressures, power consumption, and/or motor or drive performance.

Quality Control Parameters: Data related to quality control checks and/or measurements performed during the packaging process. This may include data on weight checks, visual inspections, barcode scans, fill levels, seal integrity, label accuracy, and/or other quality attributes specific to the packaged products.

Material Usage and Inventory: Data pertaining to the usage of packaging materials, such as quantities consumed, material waste or scrap rates, roll or reel changeovers, and/or inventory levels of packaging materials or consumables.

Maintenance and Repair Data: Data on maintenance activities, repairs, and/or adjustments performed on the packaging line. This may include maintenance schedules, task completion records, parts replacement history, and/or equipment downtime caused by maintenance or repairs.

Fault and Alarm Logs: Data capturing any faults, errors, or alarms encountered during the packaging process. This may include error codes, alarm notifications, fault descriptions, timestamps of occurrences, and/or any actions taken to resolve the issues.

Environmental Conditions: Data related to the environmental conditions within the packaging line and/or packaging line area, such as temperature, humidity levels, air quality, and/or other factors that can affect the packaging process or product quality.

Operator Logs and Feedback: Data recorded by users, such as shift logs, operator feedback, observations, and/or notes regarding machine performance, process improvements, and/or potential issues encountered during operation.

Using process data collected from the packaging line for the training helps to create a language model which possesses a comprehensive body of knowledge about the actual parameters, conditions and/or states of the real existing packaging line, which might differ to some extent from what is prescribed in an operator manual depending on the particular setup of the real existing packaging line, enabling the language model to answer a plethora of problem statements.

In particular, if both the collected process data and the at least one operation manual described further above is used for the training, the model can be further fine-tuned, and the likelihood of the provided answers to problem statements being even more accurate is further improved.

According to another aspect of the present disclosure, the language model has been trained using stored information which indicates a previously encountered problem and a corresponding previously generated one or more instructions indicating operations to be performed to alleviate the problem. Accordingly, a feedback loop may be provided in order to (re-)train the language model with problems that have already occurred, and/or corresponding recommended one or more instructions. This way, the language model can improve over time during operation of the packaging line, further improving its accuracy.

According to another aspect of the present disclosure, the method may comprise a step of validating the one or more instructions generated by the language model before the one or more instructions are included in the training of the language model. The validating may be performed by a user. This way, it is ensured that only accurate answers to problem statements are included in the training and are ultimately recommended by the language model.

According to another aspect of the present disclosure, the step of generating one or more instructions is further based at least in part on process data collected from the packaging line. Accordingly, the language model takes both the problem statement and process data as inputs. The process data used to this end may comprise any process data described further above in relation to the training of the language model. This way, it is possible to perform a step of determining whether a given measured process data value equals a target value or meets a target threshold or lies within a target range. The language model may perform this step in the course of generating the one or more instructions. The target value, target threshold and/or target range may be pre-defined or may be derived by the language model, e.g., based on the information in the at least one operation manual associated with the packaging line.

According to another aspect of the present disclosure, the step of generating one or more instructions comprises generating a plurality of instructions, and wherein the step of outputting comprises outputting the plurality of instructions as a sequence of operations to be performed by the user. Accordingly, the language model can provide particularly detailed and comprehensive recommendations to the user, such as in the form of a step-by-step checklist to follow.

According to another aspect of the present disclosure, the step of generating one or more instructions further comprises performing one or more conversation cycles in response to receiving the problem statement. The one or more conversation cycles may comprise generating, by the trained language model, a concretization request in natural language to prompt the user to provide additional information associated with the problem. The one or more conversation cycles may comprise outputting, via the output device, the concretization request in natural language to the user. The one or more conversation cycles may comprise receiving, via the input device, additional information associated with the problem in natural language from the user. The one or more conversation cycles may comprise generating, by the trained language model, one or more candidate instructions indicating operations to be performed by the user on the packaging line to alleviate the problem. The one or more conversation cycles may be performed until the one or more candidate instructions reach a predetermined confidence score. The confidence score may be set manually depending on the specific use case. The step of outputting may comprise outputting the one or more candidate instructions in natural language to the user. Accordingly, the language model may request additional information, or more specific information, from the user in case the original problem statement is too vague to generate a suitable answer. This way, the conversational power of the language model can be advantageously exploited to provide benefits such as improved context awareness, enhanced coherence, and more human-like conversation flow. This may enable the language model to better understand the user's intent, recall previous information, and generate responses that build upon the previous context, thereby providing a particularly guided human-machine interaction process.

According to another aspect of the present disclosure, the step of performing one or more conversation cycles is based on Chain of Thought (CoT) prompting. CoT prompting should be understood as a prompting method which encourages the language model to explain its reasoning. CoT prompting typically refers to a technique that facilitates the generation of coherent and/or contextually connected language output based on a series of prompts or cues. It aims to enhance the ability of a language model to maintain a coherent and/or logical flow of information throughout a conversation or text generation process. In traditional language models, each sentence or response is often generated independently, without considering the context or previous statements, which can result in disjointed or inconsistent output. With CoT prompting, the language model may be configured to incorporate contextual information from prior conversation cycles to generate more coherent and connected responses. CoT prompting may involve capturing and utilizing the contextual information from preceding conversation cycles to influence the generation of subsequent language output. By maintaining a "chain of thought", the language model can better understand the intended meaning and continue the conversation in a logical and coherent manner. CoT prompting can be implemented using various mechanisms. One approach is to employ recurrent neural network (RNN) or transformer-based models that have the ability to retain and utilize information from previous steps or tokens. These models can be trained to learn the dependencies between prompts and generate responses that align with the ongoing conversation.

According to another aspect of the present disclosure, the method comprises a further step of generating at least one control signal. The step may be performed based at least in part on the one or more instructions. The step may be performed by the trained language model. Alternatively, the step may be performed by a software component that receives the output of the language model, i.e., the one or more instructions. The control signal may be configured to control and/or modify an operation of the packaging line to alleviate the problem.

Non-limiting examples of control signals include:
Start/Stop Signals: These signals may initiate or halt the operation of the packaging line. By sending a stop signal, the user can quickly address any issues or perform maintenance tasks, preventing further problems.

Speed Control Signals: Adjusting the speed may help regulate the conveyor belts, robotic arms, or other moving parts of the packaging line. Slowing down or speeding up the line can help prevent product jams, reduce errors, or accommodate different packaging requirements.

Synchronization Signals: As explained further above, packaging lines typically include multiple components, machines and/or stations working together. Synchronization signals may ensure that different components of the line operate in harmony. For example, the filling machine may send a signal to the capping machine to indicate that a container is ready for capping.

Quality Control Signals: These signals may be used to monitor and/or maintain the quality of packaged products. For instance, vision systems or sensors can check the dimensions, color, or barcode of the products and send signals to reject any items that do not meet the specified criteria.

Maintenance Signals: Packaging lines typically require regular maintenance. Maintenance signals may be sent to indicate when specific machines and/or components need servicing, such as lubrication, calibration, or parts replacement.

The generated at least one control signal may directly impact the operation of the packaging line, in which case the disclosed methods may comprise a step of automatically controlling and/or modifying an operation of the packaging line in accordance with the at least one control signal. Alternatively, the at least one control signal may be executed only after confirmation by a user, such as the user who provided the original problem statement.

According to another aspect of the present disclosure, the language model has been trained using self-supervised training. Self-supervised training should be understood as a machine-learning technique that allows the language model to learn from unlabelled data by formulating the learning task itself. Unlike supervised learning, where labelled examples are required, self-supervised training may leverage the inherent structure or patterns present in the data to create proxy or "pseudo" labels automatically.

In the context of training a language model, self-supervised learning typically involves predicting missing or masked portions of the input text. The model may be presented with a corrupted version of a sentence, where a portion of the text is replaced with a special token, such as a [MASK] token. The objective of the model is to predict the original content of the masked portion based on the context provided by the surrounding words.

By training the language model using self-supervised learning, the language model can learn rich contextual representations of words and sentences, enabling it to generate coherent and contextually relevant responses.

According to another aspect of the present disclosure, the self-supervised training may comprise some, all or any suitable combination of the following steps to train the language model:
Dataset Preparation: The training data, typically a large amount thereof, is collected. The training data may be collected from any of the sources described herein, such as the at least one operation manual associated with the packaging line. This data serves as the training corpus for the language model.

Preprocessing: The training data may be preprocessed by tokenizing it into smaller units, such as words or subwords, and converting them into numerical representations suitable for model training.

Masking: During the training process, a certain percentage of the tokens in the input text may be randomly masked or replaced with [MASK] tokens. The model's objective is to predict the original content of the masked tokens.

Model Architecture: A language model architecture, such as a transformer-based model, is initialized. Transformers are well-suited for capturing contextual information from the surrounding words, making them effective for self-supervised learning tasks.

Training: The language model is trained using the masked input sentences. The model predicts the original content of the masked tokens by considering the context of the surrounding words. The model's parameters are updated through an optimization algorithm, such as stochastic gradient descent (SGD), to minimize the prediction error.

Iterative Training: The training process may be repeated over multiple iterations or epochs, where the model is exposed to different masked instances of the input sentences. This may help the model learn increasingly complex patterns and dependencies in the language.

Fine-tuning: After the initial self-supervised training, the model can be further fine-tuned on specific downstream tasks, such as text classification, language translation, or question answering. This fine-tuning process may help adapt the model's learned representations to the task at hand, enhancing its performance on those specific tasks.

The above-mentioned random masking may involve randomly selecting and replacing a portion of the input tokens with a special [MASK] token. This process may involve some or all of the following steps:
Masking Probability: A masking probability or percentage may be defined, indicating the approximate proportion of tokens that will be randomly masked in the input text. For instance, if the masking probability is set to 15%, approximately 15% of the tokens will be masked.

Random Selection: Randomly selected tokens are then chosen for masking based on the defined masking probability. The selection is typically uniform or follows a random distribution. For example, if the sentence contains 10 tokens and the masking probability is 15%, around 2 tokens will be selected for masking.

Masking Operation: The selected tokens are replaced with a special "mask" token, denoted as [MASK]. This replacement hides the original content of the token, creating a gap in the input sequence.

Training Objective: The objective of the language model during training is to predict the original content of the masked tokens based on the context provided by the surrounding words.

By randomly masking a portion of the input tokens, the language model is exposed to diverse and partially corrupted examples, forcing it to learn robust representations that can capture the underlying patterns and dependencies in the text. This helps the language model develop a deeper understanding of the language and its context, leading to improved language generation and understanding capabilities.

According to another aspect of the present disclosure, the language model has been validated using one or more first instructions generated by the language model and one or more second instructions generated by a human user, wherein the first and second one or more instructions have been generated in response to a same problem statement or set of problem statements. Accordingly, the one or more human-generated second instructions serve as ground truth for validating the language model. In one implementation, the generated first and second one or more instructions may be presented to a second user who can compare the instructions and decide which one better addresses the problem statement. The validation may be performed during or after the training.

According to another aspect of the present disclosure, the language model comprises a neural network, in particular a deep neural network and/or a transformer architecture. When the language model is implemented based on a transformer architecture, the language model may comprise one or more of the following components:
An input embedding component: The input embedding component may be configured to tokenize the input text into smaller units, such as words or subwords. Each token may be transformed into a numerical representation called an embedding. These embeddings may capture the semantic and contextual information of each token.

A positional encoding component: The positional encoding component may be configured to provide positional information to the language model. To this end, positional encodings may be added to the token embeddings. These encodings may indicate the position of each token within the input sequence and may help the language model understand the order and/or relative positions of the tokens.

One or more encoder layers: The transformer-based language model may comprise, or consists of, a stack of identical encoder layers. Each encoder layer may comprise, or consists of, two sub-layers:
a) Self-attention mechanism: Self-attention may allow the language model to weigh the importance of different words in the input sequence when generating the representations. It may capture dependencies between different positions within the input sequence. The self-attention mechanism may compute attention scores between all pairs of input positions and may generate weighted representations by attending to relevant words.
b) Feed-forward neural network: After the self-attention sub-layer, a feed-forward neural network may be applied to each position independently. This network may comprise, or consists of, two linear transformations with a nonlinear activation function in-between, allowing the language model to capture complex relationships between words.

One or more decoder layers: In addition to the encoder layer(s), the transformer-based language model may comprise a stack of decoder layers. The decoder layers may generate the output tokens based on the learned representations from the encoder layers. The decoder layers may also comprise, or consist of, two sub-layers:
a) Masked self-attention: In the decoder layers, the self-attention mechanism may be masked to prevent attending to future positions. This masking may ensure that the language model only has access to information from previously generated tokens during the decoding process.
b) Encoder-decoder attention: The decoder layers may also incorporate attention over the encoder layer representations. This may allow the language model to leverage the encoder's contextual information when generating the output tokens.

An output layer: The output layer may comprise a linear transformation. The linear transformation may be followed by a softmax activation function. It may map the final representations to a probability distribution over the vocabulary, allowing the language model to generate the most likely next token in the sequence.

The transformer architecture may enable the language model to capture long-range dependencies in the input sequence efficiently through self-attention. The transformer-based language model may process input sequences in parallel, making it highly scalable and well-suited for training on large amounts of text data. This parallelism may lead to faster training and inference times, making transformer-based models highly scalable and suitable for handling large amounts of text data. In more detail, a transformer-based language model may provide one or more of the following technical effects:
Reduced processing resources:
   a) Parallel processing: Transformers can process input sequences in parallel, which allows for efficient utilization of hardware resources such as CPUs and GPUs. This parallelism can speed up the training and/or inference process, reducing the overall computational requirements.
   b) Optimized architecture: Transformers are designed to be computationally efficient. They typically use self-attention mechanisms that capture long-range dependencies with fewer computations compared to sequential models like recurrent neural networks (RNNs). As a result, transformer-based models can achieve comparable or better performance while using fewer processing resources.
Storage space:
   a) Embedding size: Transformer-based models often use lower-dimensional embeddings compared to traditional approaches like one-hot encoding. This reduction in dimensionality may significantly reduce the storage space required to store the model's parameters.
   b) Parameter sharing: The transformer architecture may employ parameter sharing, meaning that the same parameters are used across different positions in the input sequence. This sharing may reduce the number of unique parameters to be stored, leading to reduced storage requirements.
Network bandwidth:
   a) Model compression: Transformer-based models can be compressed using various techniques such as quantization, pruning, or knowledge distillation. These methods may reduce the size of the model without significant loss in performance, resulting in reduced network bandwidth consumption during model deployment and/or inference.
   b) On-device execution: Transformers can be deployed on edge devices, such as smartphones or loT devices, enabling on-device execution without relying on cloud-based services. This may reduce the need for frequent data transfer over the network, minimizing network bandwidth usage.
Pretrained models and transfer learning:
   a) Model distribution: Pretrained transformer models can be distributed, allowing users to download and utilize them without training from scratch. This distribution reduces the need for individual users to train large models, resulting in saved processing resources and reduced network bandwidth usage.
   b) Fine-tuning: With transfer learning, pretrained transformer models can be fine-tuned on specific downstream tasks. This approach may enable reusing and adapting a pretrained model to a new task, reducing the required training time and resource consumption.

By leveraging the benefits of parallel processing, optimized architecture, model compression techniques, and/or transfer learning, transformer-based language models can reduce processing resources, storage space requirements, and/or network bandwidth consumption. These effects are particularly advantageous for deployment in resource-constrained environments, such as in the industrial production context of the present disclosure, where efficient utilization of computational resources and network bandwidth is crucial.

However, it should be understood that the concepts of the present disclosure are not strictly limited to a transformer-based language model. Rather the language model may be realized using alternative technologies such as:
Recurrent neural networks (RNNs), such as Long Short-Term Memory (LSTM) and Gated Recurrent Unit (GRU). An RNN may process sequences in a sequential manner, maintaining an internal hidden state that captures context. An RNN may be particularly effective when dealing with sequential data and short-term dependencies. However, an RNN may struggle with capturing long-range dependencies due to vanishing or exploding gradients.

Convolutional neural networks (CNNs): CNNs have been predominantly used in computer vision tasks but could also be applied to language modeling. A CNN may utilize one or more convolutional layers to capture local patterns and dependencies within the input sequence. A CNN is computationally efficient and can capture hierarchical structures in the data. However, a CNN may be limited in its ability to model long-term dependencies and sequential relationships compared to RNNs or transformers.

Recurrent convolutional neural networks (RCNNs): An RCNN may combine the strengths of both RNNs and CNNs. It may incorporate convolutional layers to capture local patterns and/or recurrent connections to capture long-term dependencies. RCNNs have shown effectiveness in tasks like sentiment analysis, text classification, and machine translation. However, they may still face challenges in modeling complex language structures and dependencies compared to transformers.

Gated convolutional neural networks (GCNNs): A GCNN may aim to address the limitations of CNNs by introducing gating mechanisms similar to those in RNNs. These gates may help control the flow of information and/or enable the model to capture long-range dependencies. GCNNs have been used for tasks like machine translation and language generation, showing promising results. However, they might not capture dependencies as effectively as transformers in some scenarios.

Hybrid architectures: Hybrid architectures may combine multiple neural network components, such as RNNs, CNNs, or transformers, to leverage their respective strengths. For example, a language model could use a combination of CNNs for local pattern extraction and/or transformers for capturing global context and/or long-range dependencies. Hybrid architectures may provide a balance between computational efficiency and capturing complex language structures.

According to another aspect of the present disclosure, the language model is deployed on a container management platform such as Kubernetes. A container management platform, also referred to as container orchestration platform, should be understood as a software framework configured to automate the deployment, scaling, and/or management of containerized applications. It may provide a lightweight and/or isolated environment to package applications and/or their dependencies, allowing for easy portability and scalability. Deploying the language model on a container management platform may provide several technical advantages, including:
Scalability: Container management platforms excels at scaling applications horizontally. When implementing a language model in a container management platform, it is easy to scale up or down the number of model instances based on the workload demand. A container management platform can automatically handle the distribution of the workload across multiple instances, ensuring efficient resource utilization and accommodating increased traffic or computational requirements.

High availability: A container management platform typically provides built-in mechanisms for ensuring high availability of the language model. By deploying the language model in a container management platform, replica sets can be configured or multiple instances of the model can be deployed across different nodes within the cluster. This redundancy ensures that the language model remains available even if one or more instances or nodes experience failures or need to be taken down for maintenance.

Resource management: A container management platform allows to define resource limits and requests for individual containers or pods. By specifying the required CPU and/or memory resources for each language model instance, the container management platform can efficiently allocate and/or manage the available resources within the cluster. This ensures that the language model instances have the necessary resources to perform optimally without impacting other applications running on the same cluster.

Load balancing: A container management platform may provide load balancing capabilities to distribute incoming requests across multiple instances of the language model. This helps evenly distribute the computational load and prevents any single instance from becoming overwhelmed. Load balancing enhances the performance and responsiveness of the language model, allowing it to handle increased user traffic effectively.

Rolling updates and rollbacks: A container management platform may support rolling updates, allowing to update the language model while ensuring minimal downtime. By gradually rolling out new versions of the model instances, the container management platform enables seamless updates without disrupting ongoing requests or user interactions. Additionally, if any issues arise during the update, the container management platform may allow for easy rollbacks to the previous working version, ensuring the availability and stability of the language model.

Resource monitoring and autoscaling: A container management platform may provide extensive monitoring and/or metrics collection capabilities. By leveraging monitoring tools and integrating them with metrics collectors such as Prometheus, one can gather valuable insights into the resource utilization, performance, and/or health of the language model instances. Based on these metrics, the container management platform can automatically scale the number of instances up or down through horizontal pod autoscaling, ensuring optimal resource usage and maintaining desired performance levels.

Infrastructure portability: A container management platform typically offers a high level of infrastructure portability. Whether the language model is run on-premises, in a public cloud, or in a hybrid environment, the container management platform may provide a consistent framework for managing and/or deploying the model. This portability allows for flexibility in choosing the infrastructure that best suits the requirements and simplifies the migration or deployment of the language model across different environments.

According to another aspect of the present disclosure, a method of training a language model is provided. The method may train the language model for use in a method for computer-assisted troubleshooting of a packaging line configured to produce packages, in particular for use in any of the methods disclosed herein. The method (i.e., the training method) may comprise a step of providing a language model, i.e., an initial un-trained model. The initial model may comprise any of the characteristics of the language models disclosed herein, e.g., the transformer architecture. The method may comprise a step of training the language model based on training data. The training data may comprise one or more of: at least one operation manual associated with the packaging line; process data collected from the packaging line; stored information which indicates a previously encountered problem and a corresponding previously generated one or more instructions indicating operations to be performed to alleviate the problem; and/or more generally any training data disclosed herein. The training may be performed using self-supervised training, as described elsewhere in the present disclosure.

All methods disclosed herein may be partly or completely computer-implemented.

According to another aspect of the present disclosure, a language model is provided which has been trained for use in any of the methods disclosed herein, in particular using the training method described above.

According to another aspect of the present disclosure, a data processing apparatus is provided, the data processing apparatus comprising means for carrying out any of the methods disclosed herein. According to another aspect of the present disclosure, a packaging line comprising such data processing apparatus is provided.

According to another aspect of the present disclosure, a computer program or a computer-readable medium having stored thereon a computer program is provided, the computer program comprising instructions which, when the program is executed by a computer, cause the computer to carry out any of the methods disclosed herein.

Still other objectives, features, aspects and advantages of the invention will appear from the following detailed description as well as from the drawings.

### Brief Description of the Drawings

The disclosure may be better understood by reference to the following drawings:
Fig. 1 is a schematic block diagram of a packaging line in accordance with embodiments of the present disclosure;
Fig. 2 is a conceptual block diagram of training data usable for training a language model in accordance with embodiments of the present disclosure;
Fig. 3 is an exemplary page of an operation manual usable as training data for a language model in accordance with embodiments of the present disclosure;
Fig. 4 is a conceptual block diagram of inputs and outputs of a trained language model in accordance with embodiments of the present disclosure;
Fig. 5 is a flowchart of a method of training a language model in accordance with embodiments of the present disclosure;
Fig. 6 is a flowchart of a method for computer-assisted troubleshooting of a packaging line in accordance with embodiments of the present disclosure.

### Detailed Description

In the following, representative embodiments illustrated in the accompanying drawings will be explained. It should be understood that the illustrated embodiments and the following descriptions refer to examples which are not intended to limit the embodiments to one preferred embodiment.

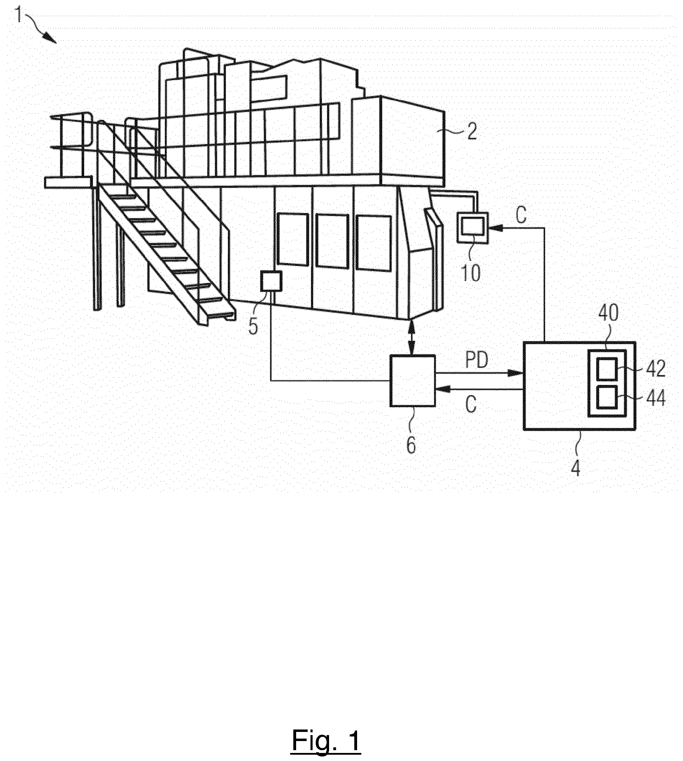

Fig. 1 illustrates a schematic block diagram of a packaging line 1 in accordance with embodiments of the present disclosure. In the illustrated embodiment, the packaging line 1 comprises one or more packaging components or machines, as non-limiting example in the figures a filling machine 2, configured for producing packages from a tube of packaging material filled with pourable (food) product. With food means anything that people and animals can ingest, eat and/or drink, including liquid, semi-liquid, viscous, dry, powder and solid food products, drink products and water. It will be appreciated that, although only the filling machine 2 is depicted in the figures, the packaging line 1 may comprise a plurality of machines and devices configured for transport and production of packages according to the general knowledge of a skilled person, e.g., different types of filling machines creating packages from blanks or tubes of packaging material, downstream treatment equipment or a warehouse for transport and/or storage of reels of packaging material and/or packages. Furthermore, the disclosed solutions may be applied for any packaging plant, including any processing machine, and for any kind of pourable food product. The packaging line 1 may be configured to produce packages at high speeds, e.g., at least 8,000 packages per hour, preferably at least 12,000 packages per hour, even more preferably at least 24,000 packages per hour.

The packaging line 1 comprises a data processing apparatus 4 configured to provide computer-assisted troubleshooting of the packaging line 1. The data processing apparatus 4 comprises a processing unit 40 configured to carry out the method of computer-assisted troubleshooting. The data processing apparatus 4 and/or the processing unit 40 may be positioned locally at the packaging line 1 and/or remotely (in a remote server or in the "cloud"). Accordingly, the packaging line 1 can include remote computing.

The packaging line 1 may comprise a plurality of sensors 5 positioned along the length thereof. Although only one sensor 5 is depicted in the figures, it will be appreciated that a plurality of sensors 5 may be present, not only at the filling machine 2 but along one or more machines or devices of the packaging line 1. The plurality of sensors 5 may be configured to collect process data PD from the packaging line 1.

The packaging line 1 may comprise actuators configured to perform operations as a function of control signals C, e.g., indicative of settings of the packaging line 1 and/or events in the packaging line 1. Just for example, the actuators may comprise sealing equipment, rollers, final folding equipment etc. within the filling machine 2. It will be appreciated that the actuators may be present all along the packaging line 1.

The packaging line 1 may comprise a control unit 6 configured to control the operation of the packaging line 1. The control unit 6 may be connected, e.g., directly or indirectly, to the plurality of sensors 5 and/or the plurality of actuators. The control unit 6 may be configured to control the actuators and/or the plurality of sensors 5. The data processing apparatus 4 may be connected (e.g., directly or indirectly) to the control unit 6. Optionally, the data processing apparatus 4 may be connected, e.g., directly or indirectly, to the plurality of sensors 5 to receive sensor signals directly therefrom. In certain embodiments, the control unit 6 and the data processing apparatus 4 may be integrated in one device.

The processing unit 40 is configured to apply a language model 42, e.g., a trained language model as disclosed elsewhere herein. The processing unit 40 also comprises a database 44 configured to store information usable by the language model 42. It should be understood that the database 44 may also be located elsewhere besides the processing unit 40. Also shown in Fig. 1 is a user interface 10 which is configured to allow a user to interact with the language model 42. To this end, the user interface 10 may comprise suitable input and output devices.

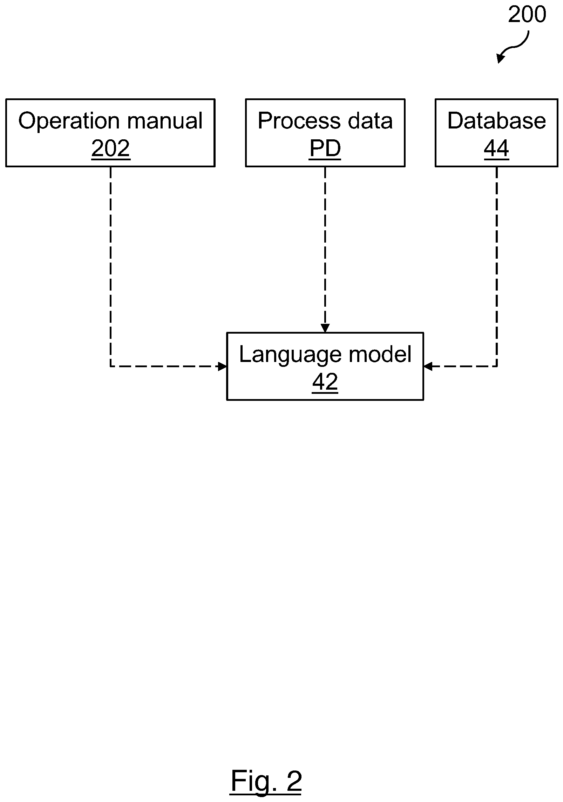

Fig. 2 illustrates a conceptual block diagram 200 of training data usable for training the language model 42 in accordance with embodiments of the present disclosure. As can be seen, the language model 42 can be used using one or more operation manuals 202 associated with the packaging line 1, process data PD collected from the packaging line 1, and/or information stored in the database 44 which indicates a previously encountered problem and a corresponding previously generated one or more instructions indicating operations to be performed to alleviate the problem. In a preferred embodiment, the language model 42 is trained using self-supervised training as elsewhere described herein. The language model 42 may be based on a transformer architecture as elsewhere described herein.

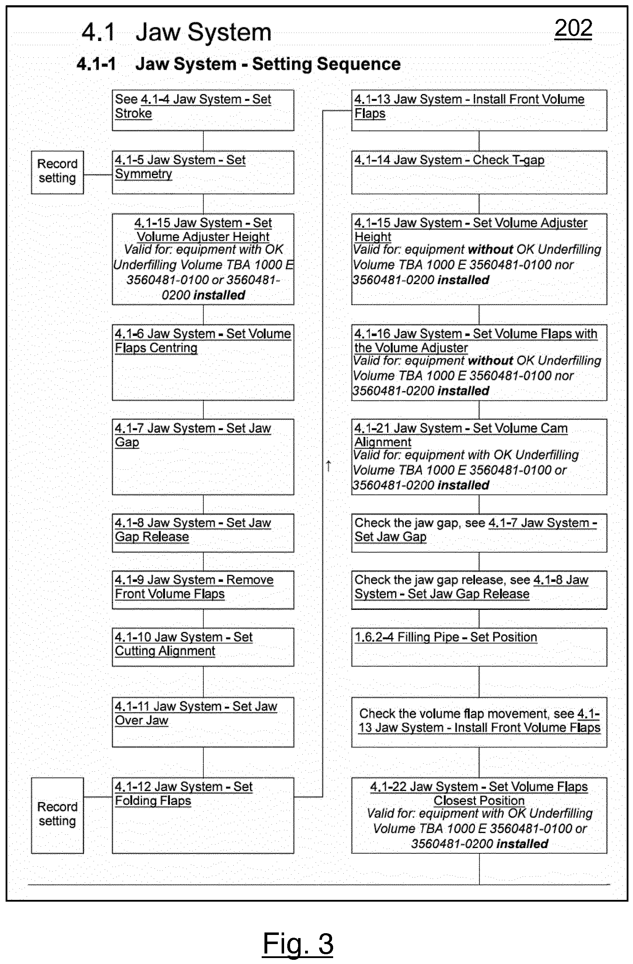

Fig. 3 illustrates an exemplary page of an operation manual 202 which can be used as training data for the language model 42 in one embodiment.

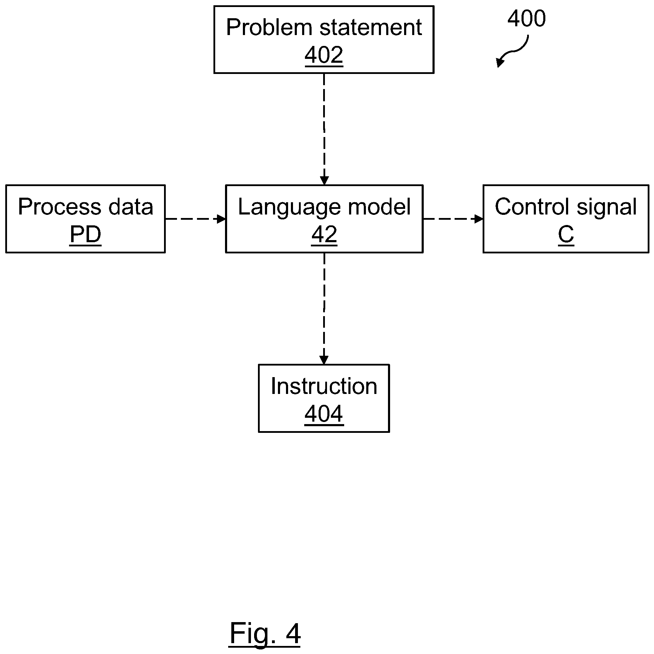

Fig. 4 illustrates a conceptual block diagram 400 of inputs and outputs of the trained language model 42 during runtime (also referred to as inference). As can be seen, the language model 42 receives as input a problem statement 402 in natural language from a user indicating a problem that has occurred during operation of the packaging line 1. The problem statement 402 may be received via the user interface 10, in particular via an input device thereof. The language model 42 generates as output one or more instructions 404 indicating operations to be performed by the user on the packaging line 1 to alleviate the problem. The one or more instructions 404 may be presented to the user via the user interface 10, in particular via an output device thereof. Fig. 4 also shows that the language model 42 may take process data PD as an input to base the one or more instructions 404 on. Also shown is a control signal C which the language model 42 may generate as an output.

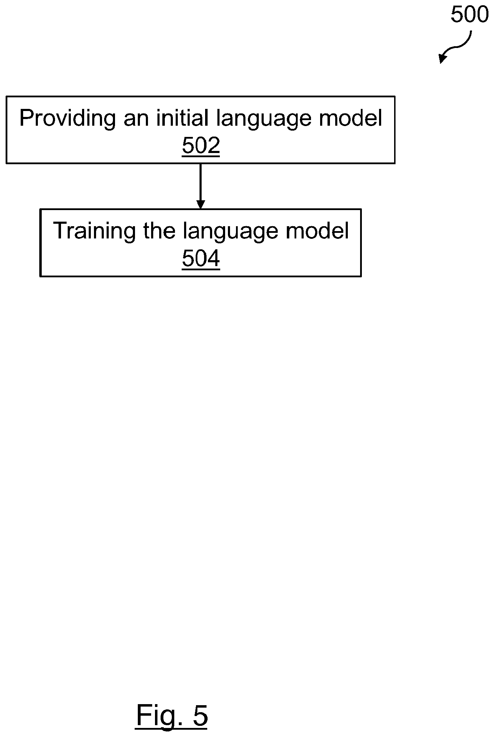

Fig. 5 illustrates a method 500 of training the language model 42. An initial, i.e., untrained, language model 42 is provided in step 502. The language model 42 is trained in step 504, preferably using self-supervised training using training data as explained in connection with Fig. 2.

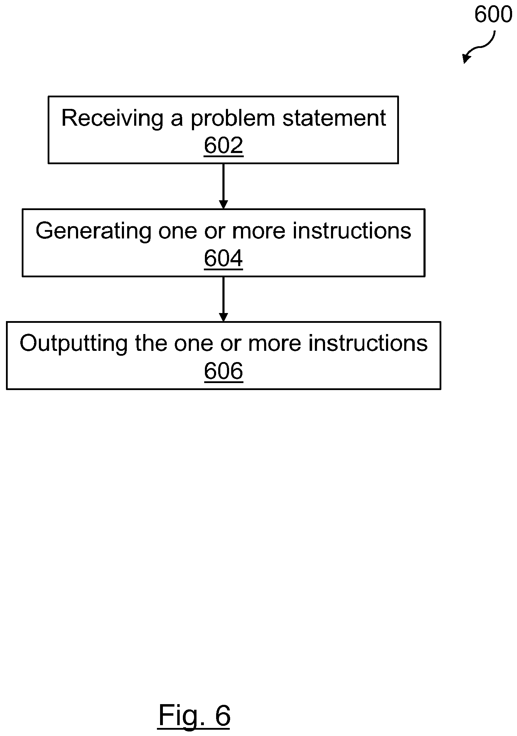

Fig. 6 illustrates a method 600 for computer-assisted troubleshooting of the packaging line 1. A problem statement 402 is received in step 602. The problem statement 402 is received in natural language from a user indicating a problem that has occurred during operation of the packaging line 1. One or more instructions 404 are generated in step 604 by the language model 42. The one or more instructions 404 indicate operations to be performed by the user on the packaging line 1 to alleviate the problem. The one or more instructions 404 are output in natural language to the user in step 606.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus. From the description above follows that, although various embodiments of the invention have been described and shown, the invention is not restricted thereto, but may also be embodied in other ways within the scope of the subject-matter defined in the following claims.

## Claims

1. A method (600) for computer-assisted troubleshooting of a packaging line (1) configured to produce packages, the method (600) comprising:
receiving (602), via an input device, a problem statement (402) in natural language from a user indicating a problem that has occurred during operation of the packaging line (1);
generating (604), by a trained language model (42) and based at least in part on the problem statement (402), one or more instructions (404) indicating operations to be performed by the user on the packaging line (1) to alleviate the problem; and
outputting (606), via an output device, the one or more instructions (404) in natural language to the user.

2. The method of claim 1, wherein the language model (42) has been trained using at least one operation manual (202) associated with the packaging line (1).

3. The method of claim 1 or 2, wherein the language model (42) has been trained using process data (PD) collected from the packaging line (1).

4. The method of any one of the preceding claims, wherein the language model (42) has been trained using stored information (44) which indicates a previously encountered problem and a corresponding previously generated one or more instructions indicating operations to be performed to alleviate the problem.

5. The method of any one of the preceding claims, wherein the step of generating (604) one or more instructions (404) is further based at least in part on process data (PD) collected from the packaging line (1).

6. The method of any one of the preceding claims, wherein the step of generating (604) one or more instructions (404) comprises generating a plurality of instructions (404), and wherein the step of outputting (606) comprises outputting the plurality of instructions (404) as a sequence of operations to be performed by the user.

7. The method of any one of the preceding claims, wherein the step of generating (604) one or more instructions further comprises:
in response to receiving the problem statement (402), performing one or more conversation cycles, comprising:
generating, by the trained language model (42), a concretization request in natural language to prompt the user to provide additional information associated with the problem;
outputting, via the output device, the concretization request in natural language to the user;
receiving, via the input device, additional information associated with the problem in natural language from the user;
generating, by the trained language model (42), one or more candidate instructions indicating operations to be performed by the user on the packaging line (1) to alleviate the problem;
wherein the one or more conversation cycles are performed until the one or more candidate instructions reach a predetermined confidence score; and
wherein the step of outputting (606) comprises outputting the one or more candidate instructions in natural language to the user.

8. The method of any one of the preceding claims, further comprising:
generating, based at least in part on the one or more instructions (404), at least one control signal (C) configured to control and/or modify an operation of the packaging line (1) to alleviate the problem.

9. The method of any one of the preceding claims, wherein the language model (42) has been trained using self-supervised training.

10. The method of any one of the preceding claims, wherein the language model (42) comprises a neural network, in particular a deep neural network and/or a transformer architecture.

11. The method of any one of the preceding claims, wherein the language model (42) is deployed on a container management platform.

12. A method (500) of training a language model (42) for use in a method for computer-assisted troubleshooting of a packaging line (1) configured to produce packages, in particular for use in the method (500) of any one of claims 1-11, wherein the method (500) comprises:
providing (502) a language model (42);
training (504) the language model (42) based on training data, wherein the training data comprises one or more of:
at least one operation manual (202) associated with the packaging line (1);
process data (PD) collected from the packaging line (1); and/or
stored information (44) which indicates a previously encountered problem and a corresponding previously generated one or more instructions indicating operations to be performed to alleviate the problem;
wherein, optionally, the training (504) is performed using self-supervised training.

13. A language model (42), trained for use in the method (600) of any one of claims 1-11, in particular using the training method (500) of claim 12.

14. A data processing apparatus (4) or a packaging line (1) comprising a data processing apparatus (4), the data processing apparatus (4) comprising means for carrying out the method (500, 600) of any one of claims 1-12.

15. A computer program or a computer-readable medium having stored thereon a computer program, the computer program comprising instructions which, when the program is executed by a computer, cause the computer to carry out the method (500, 600) of any one of claims 1-12.
